# FASCICULE DE BREVET EUROPEEN

(11) **EP 2 985 407 B1**
(45) Date de publication et mention de la délivrance du brevet: **11.10.2017**
(21) Numéro de dépôt: 15306165.0
(22) Date de dépôt: 16.07.2015
(51) Int. Cl.: E21B 17/08

(54) **CONNECTEUR DE COLONNE MONTANTE EQUIPEE D'UNE BAGUE DE VERROUILLAGE EXTERNE**
ANSCHLUSS EINER STEIGLEITUNG, DIE MIT EINEM EXTERNEN VERRIEGELUNGSRING AUSGESTATTET IST
RISER CONNECTOR PROVIDED WITH AN EXTERNAL LOCKING RING

(30) Priorité: 11.08.2014 FR 1457737
(43) Date de publication de la demande: 17.02.2016
(73) Titulaire: IFP Énergies nouvelles, 92852 Rueil-Malmaison Cedex (FR)
(72) Inventeur: PERSENT, Emmanuel, 78290 CROISSY SUR SEINE (FR); SAEEDI, Navid, 94140 ALFORTVILLE (FR); PAPON, Gerard, 78690 LES ESSARTS LE ROI (FR)

(56) Documents cités:
- WO-A1-2011/104629
- FR-A1- 2 839 339
- FR-A1- 2 925 105
- FR-A1- 2 937 676
- US-A- 4 491 346

## Description

La présente invention concerne le domaine du forage et de l'exploitation pétrolière de gisement en mer très profonde. Elle concerne un connecteur pour assembler deux tronçons de colonne montante.

Une colonne montante (ou « riser ») de forage est constituée par un ensemble d'éléments tubulaires de longueur comprise entre 15 et 27 m (50 et 90 feet), assemblés par des connecteurs. Les éléments tubulaires sont généralement constitués d'un tube principal muni de connecteurs à chaque extrémité. Des conduites auxiliaires tubulaires dites également conduites périphériques couramment nommée "kill line", "choke line", "booster line" et "hydraulic line" permettant la circulation de fluides techniques sont prévues parallèlement au tube principal. Les éléments tubulaires sont assemblés sur le lieu de forage, à partir d'un support flottant. La colonne descend dans la tranche d'eau au fur et à mesure de l'assemblage des éléments tubulaires, jusqu'à atteindre la tête de puits située sur le fond marin.

Dans l'optique de forer à des profondeurs d'eau pouvant atteindre 3500 m ou plus, le poids de la colonne montante devient très pénalisant. Ce phénomène est aggravé par le fait que, pour une même pression maximale de service, la longueur de la colonne impose un diamètre intérieur des conduites auxiliaires plus grand compte tenu de la nécessité de limiter les pertes de charge.

Par ailleurs, la nécessité de diminuer le temps d'assemblage des colonnes montantes est d'autant plus critique que la profondeur d'eau, et donc la longueur de la colonne, sont importantes.

Les documents WO 2011104629, FR 2925105, FR 2956693 et FR 2956694 décrivent différentes solutions proposant notamment de faire participer les conduites auxiliaires, conjointement avec le tube principal, à la reprise des efforts longitudinaux appliqués à la colonne montante. Toutefois pour les systèmes décrits dans ces brevets, la fixation des lignes auxiliaires par rapport au tube principal entraîne des efforts élevés de traction dans les lignes auxiliaires. Afin de résister à ces efforts de traction, les épaisseurs des lignes auxiliaires sont importantes, ce qui génère une augmentation de la masse, de la taille des flotteurs et par conséquent du coût de la colonne montante. Une liaison pivot glissant entre deux éléments tubulaires est décrite dans FR2839339. La présente invention décrit une solution qui propose une conception compacte des connecteurs au moyen d'une seule bague de verrouillage externe ou périphérique. Selon l'invention, les lignes auxiliaires sont mobiles au moyen d'une liaison pivot glissant, dont le mouvement relatif est limité par un moyen de réglage de jeu. Le connecteur selon l'invention est bien adapté pour les colonnes montantes installées en mer profonde, c'est-à-dire à une profondeur supérieure à 2000 mètres. Ainsi, les épaisseurs des lignes auxiliaires peuvent être réduites, ce qui permet des gains sur la masse des flotteurs, sur la masse totale de la colonne montante, sur le coût de la colonne montante.

### Le dispositif selon l'invention

L'invention concerne un connecteur pour assembler deux tronçons de colonne montante, comportant un premier élément de tube principal prolongé par un élément connecteur mâle muni d'une bride mâle percée par au moins un orifice pour le passage d'un premier élément de tube auxiliaire, un deuxième élément de tube principal prolongé par un connecteur femelle muni d'une bride femelle percée par au moins un orifice pour le passage d'un deuxième élément de tube auxiliaire, l'élément connecteur mâle s'emboîtant dans ledit élément connecteur femelle pour connecter les deux éléments de tube principal et les deux éléments de tube auxiliaire, ledit connecteur comprenant des moyens de verrouillage de l'assemblage. Lesdits moyens de verrouillage sont constitués d'une bague de verrouillage assemblant lesdites brides mâle et femelle en coopérant avec la périphérie desdites brides mâle et femelle, et en ce qu'un des éléments de tube auxiliaire est solidaire d'une des brides mâle ou femelle et l'autre élément de tube auxiliaire est connecté par une liaison pivot glissant à l'autre bride mâle ou femelle, ladite liaison pivot glissant autorisant un mouvement de translation relatif entre ladite bride et ledit élément de tube auxiliaire sur une distance limitée par un moyen de réglage de jeu placé entre ledit élément de tube auxiliaire et ladite bride.

Selon l'invention, ladite bague de verrouillage comporte une première et une deuxième séries de tenons sur sa face intérieure et lesdites brides mâle et femelle comportent respectivement une troisième et une quatrième séries de tenons sur leur surface périphérique, lesdites troisième et quatrième séries de tenons coopérant respectivement avec lesdites première et deuxième séries de tenons.

Avantageusement, chaque série de tenons comporte au moins deux rangées d'au moins quatre tenons.

De préférence, ledit moyen de réglage de jeu est formé par un écrou ou une pièce filetée.

Selon une première variante de réalisation de l'invention, un élément de tube auxiliaire est prolongé par un embout femelle et l'autre élément de tube auxiliaire est prolongé par un embout mâle équipé d'un écrou.

Selon une deuxième variante de réalisation de l'invention, un élément de tube auxiliaire est prolongé par un embout femelle et l'autre élément de tube auxiliaire est prolongé par un réceptacle dans lequel est insérée une goupille mâle équipée d'une butée.

Selon une troisième variante de réalisation de l'invention, un élément de tube auxiliaire est prolongé par un réceptacle dans lequel est insérée une goupille femelle et l'autre élément de tube auxiliaire est prolongé par un réceptacle, dans lequel est insérée une goupille filetée mâle, ladite goupille filetée mâle comprenant un épaulement.

De manière avantageuse, ladite distance limitée par ledit moyen de réglage de jeu est comprise entre 0 et 38,1 mm, de préférence entre 2,54 et 25,4 mm.

Selon un aspect de l'invention, ledit élément connecteur mâle comprend un manchon inséré dans ledit élément connecteur femelle.

Selon une caractéristique de l'invention, ledit élément de tube auxiliaire est un tube en acier fretté par des fils de renfort, telles que des fibres de verre, de carbone, ou en aramide enrobées dans une matrice polymère.

Selon un mode de réalisation de l'invention, ladite liaison pivot glissant est réalisée dans ladite bride mâle.

En outre, ladite distance du mouvement de translation relatif de ladite liaison pivot glissant peut être réglée de telle sorte à être positive lors de la connexion des tronçons et à être nulle lors de l'utilisation de la colonne montante pour des opérations de forage en mer.

L'invention concerne également une colonne montante comprenant au moins deux tronçons de colonne montante assemblés par un connecteur selon l'invention.

### Présentation succincte des figures

D'autres caractéristiques et avantages du procédé selon l'invention, apparaîtront à la lecture de la description ci-après d'exemples non limitatifs de réalisations, en se référant aux figures annexées et décrites ci-après.
La figure 1 schématise une colonne montante selon l'invention.
La figure 2 illustre un tronçon de colonne montante selon l'invention.
La figure 3 illustre un connecteur pour assembler deux tronçons de colonne montante selon l'invention.
La figure 4 illustre une vue éclatée avant connexion de la bague de verrouillage et la bride mâle.
Les figures 5 à 7 représentent trois variantes de réalisation selon l'invention d'une ligne auxiliaire.
La figure 8 est une courbe représentant la masse de la colonne montante en fonction du jeu pour un exemple selon l'invention.

### Description détaillée de l'invention

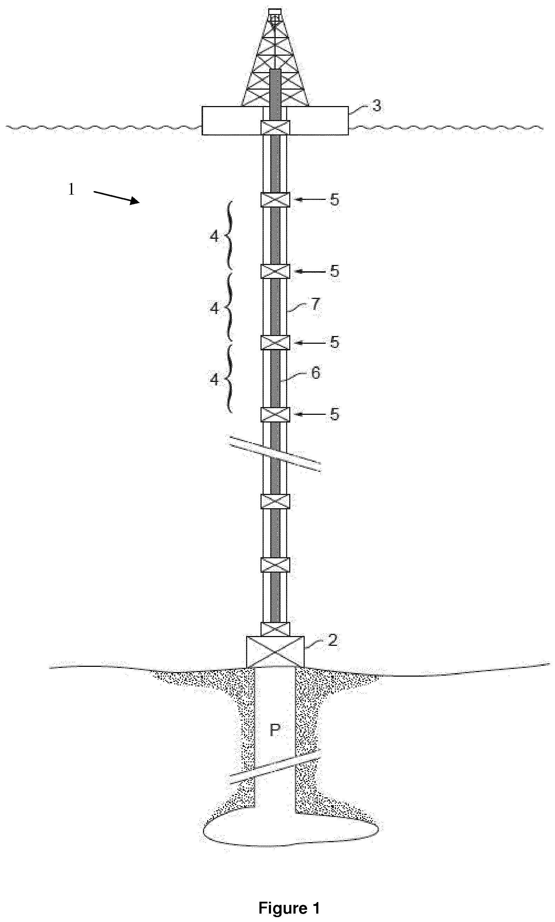

La figure 1 schématise une colonne montante 1 installée en mer. La colonne montante 1 prolonge le puits P et s'étend depuis la tête de puits 2 jusqu'à un support flottant 3, par exemple une plateforme ou un bateau. La tête de puits 2 est munie d'obturateurs couramment nommé "B.O.P." ou "Blow Out Preventer". La colonne montante 1 est constituée par l'assemblage de plusieurs tronçons 4 assemblés bout à bout par des connecteurs 5. Chaque tronçon est composé d'un élément de tube principal 6 muni d'au moins un élément de conduite auxiliaire 7, également appelée conduite périphérique. Les conduites auxiliaires dénommées "kill line" ou "choke line" sont utilisées pour assurer la sécurité du puits pendant le déroulement des procédures de contrôle des venues de fluides sous pression dans le puits. La ligne "choke" est une ligne de sécurité véhiculant des fluides (huile, eau, gaz) en provenance du puits lors d'une venue et les dirigeant vers le manifold de duses et la torche. La ligne "kill" est une ligne de sécurité qui permet d'injecter dans le puits des fluides lourds et des ciments permettant de stopper une éruption incontrôlable autrement. La conduite dénommée "booster line" permet d'injecter de la boue dans le puits afin d'augmenter sa vitesse de remontée et d'éviter la sédimentation des déblais ; elle sert aussi pour remplacer la boue contenue dans le riser par de l'eau avant une déconnexion. La conduite dénommée "hydraulic line" permet de commander l'obturateur de la tête de puits. Les lignes hydrauliques permettent d'alimenter les organes de sécurité des BOP (vannes et accumulateurs) en fluide hydraulique (eau distillée chargée en glycol) sous pression.

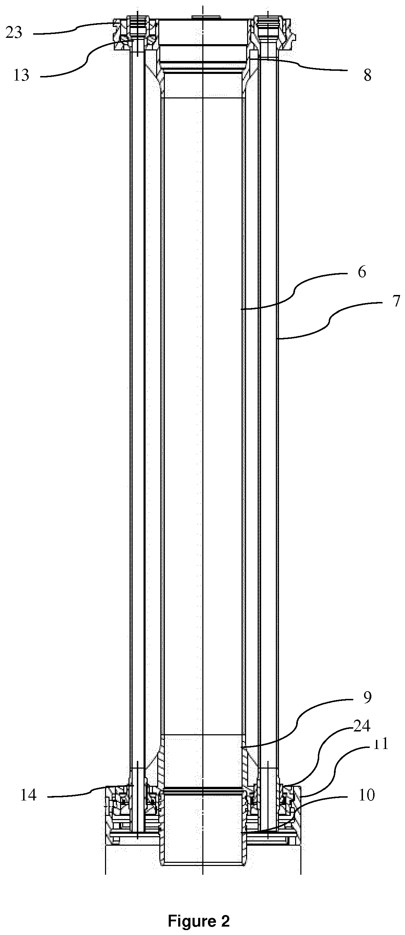

La figure 2 représente schématiquement un tronçon 4 de la colonne montante selon un mode de réalisation de l'invention. Le tronçon 4 comporte un élément de tube principal 6 dont l'axe constitue l'axe de la colonne montante. Les tubes auxiliaires 7 constituent des lignes ou conduites auxiliaires disposées parallèlement à l'axe du tube principal. Les éléments de tube auxiliaire 7 ont des longueurs sensiblement égales à la longueur de l'élément de tube principal 6, en général compris entre 10 et 30 mètres. Il y a au moins une ligne 7 disposée à la périphérie du tube principal. Sur la figure 2, deux lignes 7 sont schématisées.

Un connecteur 5 représenté sur la figure 1 comprend notamment deux éléments désignés, en référence à la figure 2, par l'élément connecteur femelle 8 et l'élément connecteur mâle 9. Les éléments connecteurs 8 et 9 sont montés aux extrémités de l'élément de tube principal 6. L'élément connecteur femelle 8 est solidaire du tube 6, par exemple au moyen d'un soudage, d'un vissage, d'un sertissage ou d'une liaison par coincement. L'élément connecteur mâle 9 est solidaire du tube 6, par exemple au moyen d'un soudage, d'un vissage, d'un sertissage ou d'une liaison par coincement. L'assemblage de l'élément connecteur mâle 9 avec un élément connecteur femelle 8 d'un autre tronçon forme le connecteur 5 qui transmet des efforts d'un tronçon de colonne montante au tronçon suivant, notamment les efforts longitudinaux auxquels est soumise la colonne montante.

L'élément connecteur femelle 8 et l'élément connecteur mâle 9 sont munis respectivement d'une bride femelle 23 et d'une bride femelle 24, qui sont percées par au moins un orifice pour le passage des éléments de tube auxiliaire 7. Selon l'invention, les éléments connecteurs 8 et 9 prolongent l'élément de tube principal 6 en augmentant l'épaisseur et la section externe du tube, pour former respectivement les brides 23 et 24. De préférence, la section extérieure des éléments connecteurs 8 et 9 varie progressivement le long de l'axe de la conduite principale 6, de manière à éviter une variation brusque de section entre le tube 6 et les brides 23 et 24 qui fragiliserait la tenue mécanique du connecteur 5. Par exemple, en référence à la figure 2, les brides 23 et 24 forment des congés.

Le connecteur 5 peut être conçu et dimensionné pour satisfaire les spécifications mentionnées par les normes API 16 R et API 2RD éditées par l'American Petroleum Institute (Institut Américain du Pétrole).

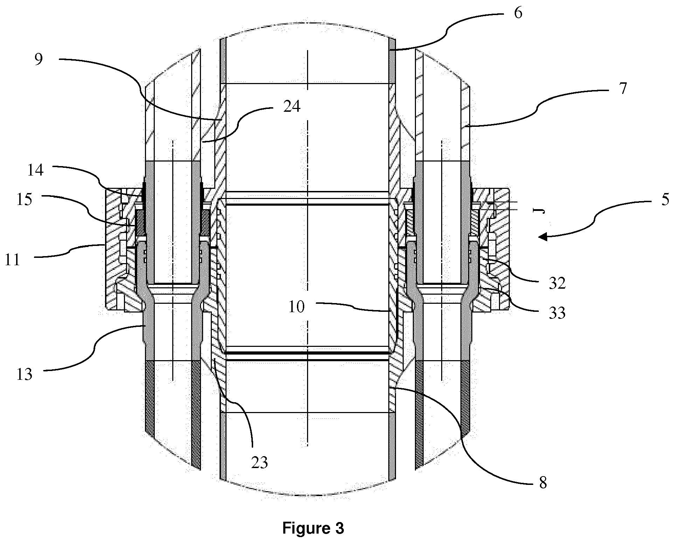

La figure 3 représente un exemple de connecteur 5 selon l'invention, dans lequel un élément connecteur mâle 9 est emboîté dans un élément connecteur femelle 8. Une portion de l'élément connecteur mâle 9 pénètre dans l'élément connecteur femelle 8. Cet emboîtement est limité par une butée axiale : l'extrémité de l'élément connecteur mâle 9 vient en butée contre l'épaulement axial pratiqué sur la surface intérieure de l'élément connecteur femelle 8 : l'épaulement axial pratiqué sur la surface extérieure de l'élément connecteur mâle 9 vient en butée contre l'épaulement axial pratiqué sur la surface intérieure de l'élément connecteur femelle 8. Tel que représenté sur les figures 2 et 3, l'élément connecteur mâle 9 peut comprendre un manchon 10 fixé dans l'élément connecteur mâle. Le manchon 10 a un rôle de centrage et d'étanchéité des éléments connecteurs mâle 9 et femelle 8. La fixation du manchon 10 peut être réalisée par soudure, filetage, collage, frettage ou tout autre moyen analogue. A la place du manchon 10, des variantes de réalisation non représentées peuvent être envisagées, tel qu'un prolongement de l'élément de tube principal 6.

Le connecteur 5 comporte une seule bague de verrouillage 11 qui coopère avec la périphérie des brides femelle 23 et mâle 24, c'est-à-dire avec la surface extérieure de plus grand diamètre des brides. La bague de verrouillage 11 est alors une bague périphérique, ou externe, placée à l'extérieur des brides, le diamètre de la bague 11 est donc supérieur au diamètre des brides 23 et 24. Lorsque l'élément connecteur mâle 9 est emboîté dans un élément connecteur femelle 8, une partie de la bague 11 coopère avec la périphérie des brides femelle 23 et mâle 24, notamment au moyen de tenons formant des connexions à baïonnette. Le verrouillage et le déverrouillage du connecteur 5 sont réalisés par rotation de la bague 11 (verrouillage du type à baïonnette). La bague 11 peut être munie d'un moyen de manoeuvre, par exemple une barre de manoeuvre qui peut être démontable. La barre de manoeuvre permet de faire tourner la bague 11. Les efforts longitudinaux, c'est-à-dire qui sont dirigés selon l'axe du tube principal, sont transmis d'un tronçon 4 au tronçon adjacent 4 par l'intermédiaire des connexions entre la bague 11 et les éléments connecteur femelle 8 et mâle 9. Notamment, les efforts longitudinaux sont transmis des tenons de la bride mâle 24 aux tenons de la bague 11 et des tenons de la bague 11 aux tenons de la bride femelle 23.

Selon un exemple de réalisation, la bague de verrouillage 11 est montée sur la bride mâle 24. Tel qu'illustré sur les figures 2, 3 et 4, la bague de verrouillage 11 comprend sur sa face intérieure une première série 40, 41 de tenons coopérant avec une série de tenons 42, 43 située sur la face extérieure de la périphérie de la bride mâle 24. Ainsi, la bague de verrouillage 11 est fixée à la bride mâle 24, lorsque que des tronçons de colonne montante sont connectés. En situation non verrouillée, la bague est solidaire de l'élément mâle au moyen de pions (non représentés sur la figure 3). La bague 11 comprend de l'autre côté sur sa face intérieure une deuxième série de tenons 30, 31 coopérant avec une série de tenons 32, 33 situés sur la face extérieure de la périphérie de l'élément connecteur femelle 8.

Cette réalisation de la bague de verrouillage 11 avec des connexions à baïonnette avec les deux brides permet de réaliser un connecteur entièrement démontable pour faciliter l'inspection et la maintenance du connecteur. De plus, cette réalisation de la bague de verrouillage 11 permet de réaliser une bague 11 et des éléments connecteurs mâle 9 et femelle 8 et leurs brides 23, 24 quasi symétriques, ce qui facilite leur fabrication.

La bague 11 est maintenue au moyen des séries de tenons de la bague et des brides mâle 24 et femelle 23. Ainsi, les efforts axiaux passent de l'élément connecteur mâle 9 à l'élément connecteur femelle 8 via les tenons sans transiter par le manchon 10.

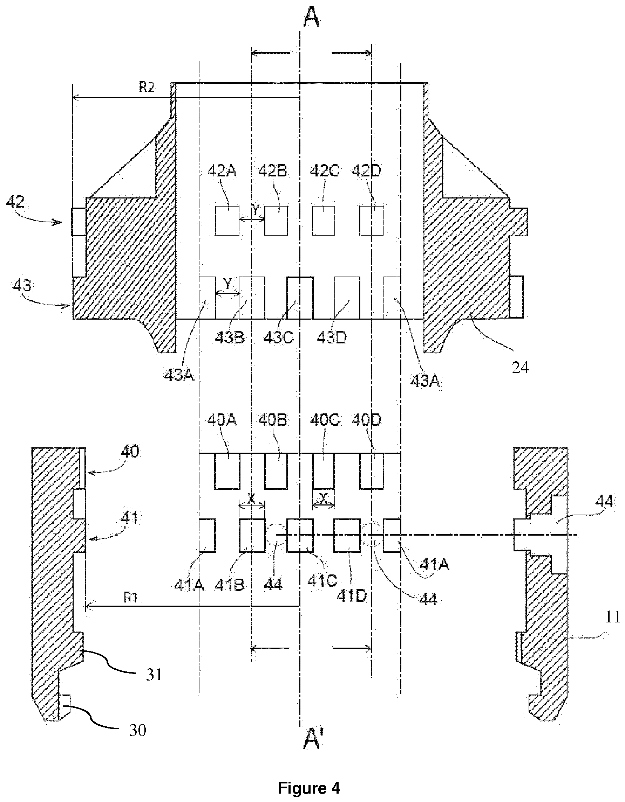

En référence aux figures 3 et 4, la bride mâle 24, la bride femelle 23 comportent respectivement une série de tenons constituée de deux couronnes (ou rangées) de tenons ou ergots. La bague 11 comporte quant à elle deux séries de tenons pouvant être constituées respectivement de deux couronnes (ou rangées) de tenons ou ergots. Les tenons s'étendent préférentiellement selon des directions radiales. Selon un mode de réalisation préférentiel, chaque couronne (rangée) de tenons comporte quatre tenons. Sur la figure 4, la bride mâle 24 comporte une première couronne 42 de quatre tenons 42A, 42B, 42C, 42D et une deuxième couronne 43 de quatre tenons 43A, 43B, 43C, 43D. La bague 11 comporte également une première couronne 40 de quatre tenons 40A, 40B, 40C, 40D et une deuxième couronne 41 de quatre tenons 41A, 41B, 41C, 41D. Les tenons 42, 43 de la bride mâle 24 coopèrent avec les tenons 40, 41 de la bague de verrouillage 11. La figure 4 représente uniquement la connexion entre la bride mâle 24 et la bague 11, la connexion entre la bride femelle 23 et la bague 11 étant sensiblement symétrique.

Pour chaque assemblage entre la bague 11 et une bride, les tenons sont décalés angulairement d'une couronne à l'autre et sont inscrits dans des surfaces cylindriques de même rayon.

La première et deuxième couronnes 40, 41 de tenons de la bague 11 sont inscrits dans un cylindre de rayon R1. Les première et deuxième couronnes 42, 43 de tenons de la bride mâle sont inscrits dans un cylindre de rayon R2 supérieur au rayon R1. Alternativement, les couronnes 40, 41, 42, 43 de tenons peuvent être inscrits dans des cylindres de rayons différents.

Les tenons 40 de la première couronne de la bague 11 coopèrent avec les tenons 42 de la première couronne de la bride mâle 24 pour former un assemblage à baïonnette. Les tenons 41 de la deuxième couronne de la bague 11 coopèrent avec les tenons 43 de la deuxième couronne de la bride mâle 24.

En outre, telle qu'illustrée à la figure 4, la bague 11 peut comporter un ou plusieurs orifices 44 pour le passage de goupilles pour le blocage de la bague 11 sur la bride mâle 24. De préférence, la bague de verrouillage 11 est pourvue d'au moins deux orifices 44, ou au moins trois orifices 44 dans le but de limiter et d'éviter le coincement de la bague de verrouillage 11 sur la bride mâle 24. Selon une variante préférée de réalisation, la bague de verrouillage 11 comprend un orifice 44 pour une goupille entre chaque tenon de la couronne de tenons 41.

Plus précisément lors de l'engagement de la bague 11 autour de la bride mâle 24, la bague 11 suit un mouvement de translation dans la direction de l'axe du tube principal selon les étapes successives :
- la deuxième couronne 41 de la bague 11 passe à l'extérieur de la première couronne 42 de la bride mâle 24, puis
- les tenons de la deuxième couronne 41 de la bague 11 s'engagent entre les tenons 43 de la deuxième couronne de la bride mâle 24 et simultanément les tenons de la première couronne 40 de la bague 11 s'engagent entre les tenons 42 de la première couronne de la bride mâle 24, puis
- lorsque la bague 11 arrive en butée, les tenons 40 de la première couronne de la bague 11 se logent dans une rainure (schématisée sur les figures 3 et 4) pratiquée dans la bride mâle 24 entre la première couronne 42 et la deuxième couronne 43 de la bride mâle et les tenons 41 de la deuxième couronne de la bague 11 se logent dans une rainure (schématisée sur les figures 3 et 4) pratiquée dans la bride mâle 24 sous la deuxième couronne 43 de la bride mâle 24.

Puis lorsque la bague 11 est en butée contre la bride mâle 24, on fait pivoter la bague 11 de manière à ce que les tenons de la bague soient positionnés face aux tenons de la bride mâle 24. Les tenons 40 de la première couronne de la bague 11 sont positionnés face aux tenons 42 de la première couronne de la bride mâle 24 et les tenons 41 de la deuxième couronne de la bague 11 sont positionnés face aux tenons 43 de la deuxième couronne de la bride mâle 24. Ainsi, les tenons de la bague 11 sont en butées axiales par rapport aux tenons de la bride mâle 24.

Chacun des deux systèmes d'assemblage à baïonnette peut permettre d'assurer entre les tenons de la bride mâle 24 et les tenons de la bague 11 un contact sur une plage angulaire totale qui peut atteindre 175°. De préférence, les deux systèmes d'assemblage étant angulairement décalés autour de l'axe du connecteur, le connecteur selon l'invention permet de répartir les charges axiales sur environ 350° autour de l'axe.

Alternativement, selon l'invention, la bague 11 et la bride mâle 24 peuvent ne comporter chacun qu'une seule couronne : les tenons de l'unique couronne de la bague 11 coopèrent avec les tenons de l'unique couronne de la bride mâle 24.

Le nombre de tenons par couronne peut varier, notamment en fonction des diamètres du tube intérieur et des efforts à transmettre par le connecteur.

Selon l'invention, le système de verrouillage par baïonnette de la bague 11 dans la bride femelle 23 aux moyens de la série de tenons 30, 31 est similaire au système de verrouillage par baïonnette de la bague 11 dans la bride mâle 24 :
- les tenons 32, 33 de la bride femelle 23 coopèrent avec les tenons 30, 31 de la bague de verrouillage 11,
- la bride femelle 23 et la bague 11 comportent respectivement deux couronnes (ou rangées) de tenons ou ergots, permettant d'assurer le verrouillage axial du connecteur 5,
- les tenons s'étendent préférentiellement selon des directions radiales,
- les relations entre les rayons sont également vérifiées afin de pouvoir insérer la bague 11 dans la bride femelle 23,
- selon un mode de réalisation préférentiel, chaque couronne (rangée) de tenons comporte quatre tenons...

Lors de l'engagement de la bague 11 autour de la bride femelle 23, la bague 11 suit un mouvement de translation dans la direction de l'axe du tube principal selon les étapes successives :
- la deuxième couronne 30 de la bague 11 passe à l'extérieur de la première couronne 33 de la bride femelle 23, puis
- les tenons de la deuxième couronne 30 de la bague 11 s'engagent entre les tenons 32 de la deuxième couronne de la bride femelle 23 et simultanément les tenons de la première couronne 31 de la bague 11 s'engagent entre les tenons 66 de la première couronne de la bride femelle 23, puis
- lorsque la bague 11 arrive en butée, les tenons 30 de la première couronne de la bague 11 se logent dans une rainure (schématisée sur la figure 3) pratiquée dans la bride femelle 23 entre la première couronne 32 et la deuxième couronne 33 de la bride femelle 23 et les tenons 31 de la deuxième couronne de la bague 11 se logent dans une rainure (schématisée sur la figure 3) pratiquée dans la bride femelle 23 sous la deuxième couronne 33 de la bride femelle 24.

Puis lorsque la bague 11 est en butée contre la bride femelle 23, on fait pivoter la bague 11 de manière à ce que les tenons de la bague soient positionnés face aux tenons de la bride femelle 23. Les tenons 30 de la première couronne de la bague 11 sont positionnés face aux tenons 32 de la première couronne de la bride femelle 23 et les tenons 31 de la deuxième couronne de la bague 11 sont positionnés face aux tenons 33 de la deuxième couronne de la bride femelle 23. Ainsi, les tenons de la bague 11 sont en butées axiales par rapport aux tenons de la bride femelle 23 et bloquent en translation l'élément connecteur femelle 8 par rapport à l'élément connecteur mâle 9.

Dans la liaison de la bague 11 par rapport à l'élément connecteur mâle 9, il peut être prévu des pions supportant le poids de la bague 11 lorsque la connexion est déverrouillée.

Un système de verrouillage peut être prévu pour permettre de bloquer en rotation la bague 11.

Selon l'invention, l'élément de conduite auxiliaire 7 est solidairement lié avec une liaison encastrement (sans mouvement relatif entre les pièces) à une seule extrémité du tube principal 6 et est connecté par une liaison pivot glissant avec l'autre extrémité du tube principal. Dans la présente demande, une liaison pivot glissant désigne une liaison qui lie un premier solide à un deuxième solide, le premier solide pouvant translater par rapport au deuxième solide dans la direction d'un axe et le premier solide pouvant pivoter par rapport au deuxième solide autour de ce même axe. Ainsi l'élément de conduite auxiliaire 7 peut coulisser et pivoter selon sa direction axiale par rapport au tube principal 6, l'élément de conduite auxiliaire 7 n'est pas libre de mouvement dans les directions radiale et tangentielle, c'est-à-dire dans les directions d'un plan perpendiculaire à la figure 3.

En d'autres termes, le tronçon de colonne montante 4 comporte à chacune de ses extrémités des moyens de liaison, schématisés sur la figure 3, qui permettent d'un côté de lier axialement un élément de conduite auxiliaire 7 au tube principal 6 et de l'autre côté de former la liaison pivot glissant entre l'élément de conduite auxiliaire 7 et le tube principal 6.

Selon un mode de réalisation de l'invention illustré à la figure 3, la liaison encastrement entre l'élément de conduite auxiliaire 7 et l'élément de conduite principale 6 est réalisée au niveau de la bride femelle 23, et la liaison pivot glissant entre l'élément de conduite auxiliaire 7 et l'élément de conduite principale 6 est réalisée au niveau de la bride mâle 24. Alternativement, la liaison encastrement entre l'élément de conduite auxiliaire 7 et l'élément de conduite principale 6 est réalisée au niveau de la bride mâle 24, et la liaison pivot glissant entre l'élément de conduite auxiliaire 7 et l'élément de conduite principale 6 est réalisée au niveau de la bride femelle 23. Seule la première variante est décrite dans la suite de la description, la deuxième variante se déduisant par symétrie.

Au niveau de l'extrémité du tronçon munie de l'élément connecteur femelle 8, le tube principal 6 est prolongé par la bride femelle 23 comportant un passage cylindrique dans lequel l'élément de conduite auxiliaire 7 peut coulisser. L'élément de conduite auxiliaire 7 comporte une butée, par exemple un écrou ou un épaulement pour positionner axialement l'élément 7 par rapport à la bride 23. Lors du montage de l'élément de conduite auxiliaire 7 sur le tube principal 6, une butée de l'élément 7 vient en appui sur la bride femelle 23, par exemple contre l'épaulement axial pratiqué dans le passage cylindrique de sorte à former une liaison encastrement sans mouvement relatif entre les pièces.

Au niveau de l'extrémité du tronçon munie de l'élément connecteur mâle 9, le tube principal 6 est prolongé par la bride mâle 24 comportant un passage cylindrique dans lequel l'élément de conduite auxiliaire 7 peut coulisser et pivoter. L'élément de conduite auxiliaire 7 comporte un moyen de réglage de jeu 15 (ou butée réglable) permettant de limiter la distance du mouvement de translation relatif entre l'élément de conduite auxiliaire 7 et la bride mâle 24. Le moyen de réglage de jeu 15 forme une butée disposée à une distance ajustable J de la bride mâle 24. Ainsi, lors du montage, un jeu J est réglé par le moyen de réglage de jeu 15. Puis lorsque la colonne montante est mise sous tension, le mouvement relatif ou la déformation de l'élément de conduite auxiliaire 7 ou de l'élément de tube principal 6 est limitée d'une distance J, au-delà d'une certaine tension, le jeu devient nul et l'élément de conduite auxiliaire 7 est en butée dans la bride 24.

Les éléments connecteurs femelle 8 et mâle 9 ont des formes de révolution autour de l'axe de l'élément tubulaire principal. Selon une variante de réalisation de l'invention, les brides 23 et 24 peuvent comporter des renforts positionnés au droit de certaines lignes auxiliaires (par exemple « choke line » et « kill line »). Selon l'invention, les éléments connecteurs 8 et 9 prolongent l'élément de tube principal 6 en augmentant l'épaisseur et la section externe du tube, pour former respectivement les brides 23 et 24. De préférence, la section extérieure des éléments connecteurs 8 et 9 varie progressivement le long de l'axe 8, de manière à éviter une variation brusque de section entre le tube 6 et les épaulements 23 et 24 qui fragiliserait la tenue mécanique du connecteur 5. Par exemple, en référence à la figure 2, les brides 23 et 24 forment des congés.

Les tubes auxiliaires 7 sont soumis à des efforts de compression axiale engendrés par la différence de pression interne/externe qui génère un « effet de fond » qui s'applique sur les extrémités de tubes (par exemple les lignes auxiliaires peuvent être soumises à des pressions de l'ordre de 1034 bar soit 15000 psi). Sous ces pressions, les éléments du tube principal s'allongent et les éléments des tubes auxiliaires se raccourcissent jusqu'à ce que le jeu J soit nul. Lorsque que le jeu J devient nul, toutes les lignes s'allongent de manière identique. Les éléments du tube principal 6 sont susceptibles de s'allonger car ils doivent supporter en totalité ou partiellement, d'une part le poids de la colonne montante et le poids de la boue de forage, et d'autre part, les efforts de tension imposés à la colonne montante pour la maintenir sensiblement verticale. En général, les éléments de tube principal en tête de la colonne montante, c'est-à-dire proches de la surface de la mer, subissent les efforts de tension maximum, donc l'allongement maximum. Les éléments des tubes auxiliaires 7 sont susceptibles de se raccourcir sous l'effet de la différence entre la pression interne et la pression externe due au fluide qu'ils contiennent. En effet, le fluide applique une pression sur les extrémités des éléments de tube auxiliaire 7 en imposant des efforts de compression aux éléments de tube auxiliaire 7. De plus, la déformation radiale du tube dû à la différence entre la pression interne et la pression externe entraîne un raccourcissement du tube. En général, les éléments 4 en pied de colonne montante, c'est-à-dire à proximité du fond marin, subissent la différence de pression interne/externe maximum, donc le raccourcissement maximum.

Tant que le jeu J est positif, l'élément de tube auxiliaire 7 et l'élément de tube principal 6 situés à la même hauteur peuvent varier de longueur indépendamment les uns par rapport aux autres. En revanche quand le jeu J devient nul c'est-à-dire lorsque le moyen de réglage de jeu 15 est en contact avec la bride mâle 24, l'élément de tube auxiliaire 7 et l'élément de tube principal 6 correspondant forment un ensemble hyperstatique : l'élément de tube auxiliaire 7 est solidaire à l'élément de tube principal 6 d'une part au niveau de moyen de fixation, et d'autre part au niveau de la butée qui est en contact avec la bride 24. Par conséquent, l'élément de tube principal 6 induit des efforts de tension dans l'élément de tube auxiliaire 7, et réciproquement.

Ainsi, ces liaisons permettent de répartir les efforts de tension, s'appliquant sur chacun des tronçons de la colonne montante, entre le tube principal 6 et les éléments de conduite auxiliaire 7, tout en évitant le flambage des éléments de conduite auxiliaire 7. L'intégration selon l'invention via la mise en place du jeu J permet d'augmenter la contribution du tube principal et par conséquent de réduire les efforts axiaux dans les lignes périphériques. La réduction des efforts axiaux dans les lignes périphériques grâce à cette intégration présente un bénéfice sur le dimensionnement des embouts et sur le dimensionnement des épaisseurs des tubes auxiliaires.

Avantageusement, le jeu J est choisi en fonction de la longueur du tronçon, en effet les déformations des différentes lignes dépendent de la longueur de celles-ci. Pour un tronçon de colonne montante classique de 75 ou 90 ft (22,86 m et 27,43 m), le jeu J est réglé entre 0 et 1,5 pouce (0 et environ 38,1 mm). De préférence, le jeu J est choisi entre 0,1 et 1 pouce, (2,54 et 25,4 mm) pour une répartition optimale des efforts dans les lignes, permettant d'engendrer une diminution de la masse de la colonne montante. Alternativement, le jeu J est choisi entre 0,1 et 0,25 pouce (2,54 et 6,35 mm). Selon une alternative, le jeu J est choisi entre 0,25 et 1 pouce (6,35 mm et 25,4 mm). Une solution préférentielle présentant un bon compromis est un jeu d'environ 0,5 pouce (12,7 mm) ou un pouce (25,4 mm).

Selon l'invention, le moyen de réglage de jeu 15 est réalisé par un écrou ou par un élément fileté. Le jeu J est réglé (avant connexion des tronçons) en fonction des efforts et des pressions appliqués sur les éléments de tube principal 6 et les éléments de tube auxiliaire 7. La présence de jeu présente un bénéfice sur le dimensionnement des embouts des lignes périphériques et sur le dimensionnement des épaisseurs des tubes auxiliaires.

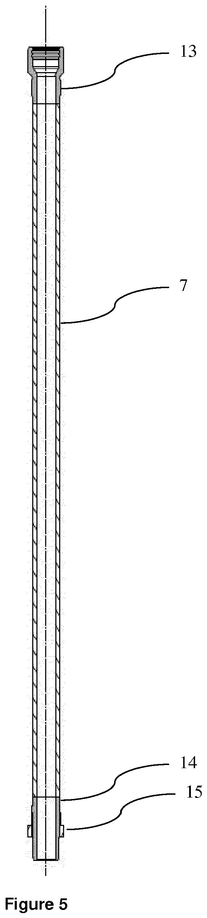

Les figures 5 à 7 illustrent trois variantes de réalisation d'éléments de tube auxiliaire 7 équipé de moyens de réglage de jeu.

Selon une première variante de réalisation de l'invention illustrée sur les figures 2, 3 et 5, les éléments 7 de lignes auxiliaires sont raccordés bout à bout au moyen de raccords. Un raccord est composé d'un embout mâle 14 situé à une extrémité de l'élément 7 et d'un embout femelle 13 situé à l'autre extrémité de l'élément 7. Un embout mâle 14 coopère de façon étanche avec l'embout femelle 13 d'un autre élément 7. Par exemple, l'embout mâle 14 du raccord est une partie tubulaire qui s'insère dans une autre partie tubulaire 13. La surface intérieure de l'embout femelle 13 est ajustée à la surface extérieure de l'embout mâle 14. Des joints sont montés dans des rainures usinées sur la surface intérieure de l'embout femelle 13 afin d'assurer l'étanchéité de la liaison. Le raccord autorise un déplacement axial d'un des éléments 7 par rapport à l'autre, tout en maintenant la liaison étanche entre les deux éléments. Les embouts mâle 14 et femelle 13 sont fixés par exemple par soudure ou sertissage à un tube central ayant sensiblement la même longueur que l'élément de conduite principal 6 auquel est rattaché l'élément de conduite auxiliaire 7. Pour cette variante de réalisation de l'invention, le moyen de réglage de jeu est formé par un écrou 15 positionné sur l'embout mâle 14 sur une portion filetée non destinée à être insérée dans un embout femelle 13.

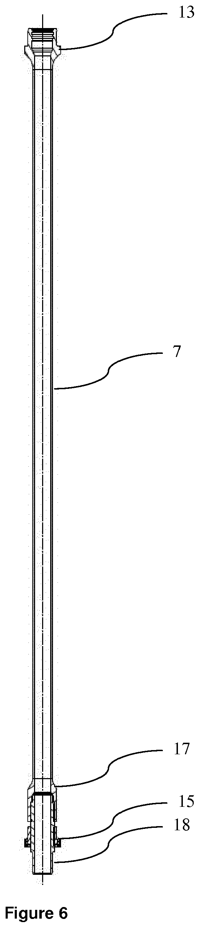

Selon une deuxième variante de réalisation de l'invention illustrée sur la figure 6, les éléments 7 de lignes auxiliaires sont raccordés bout à bout au moyen de raccords. Un raccord est composé d'une goupille mâle 18 insérée dans un réceptacle 17 à une extrémité de l'élément 7 et d'un embout femelle 13 situé à l'autre extrémité de l'élément 7. La goupille mâle 18 coopère de façon étanche avec l'embout femelle 13 d'un autre élément 7. Par exemple, la goupille mâle 18 du raccord est une partie tubulaire qui s'insère dans une autre partie tubulaire 13. La surface intérieure de l'embout femelle 13 est ajustée à la surface extérieure de la goupille mâle 18. Des joints sont montés dans des rainures usinées sur la surface intérieure de l'embout femelle 13 afin d'assurer l'étanchéité de la liaison. Le raccord autorise un déplacement axial d'un des éléments 7 par rapport à l'autre, tout en maintenant la liaison étanche entre les deux éléments. L'embout femelle 13 est fixé par exemple par soudure ou sertissage à un tube central ayant sensiblement la même longueur que l'élément de conduite principal 6 auquel est rattaché l'élément de conduite auxiliaire 7. Le réceptacle 17 est fixé par exemple par soudure ou sertissage au tube central. La goupille mâle 18 est fixée au réceptacle 17 notamment par vissage. Ainsi, la goupille mâle 18 est une pièce d'usure pouvant être changée lors de la maintenance de la colonne montante. Pour cette variante de réalisation de l'invention, le moyen de réglage de jeu est formé par un écrou 15 positionné sur la goupille mâle 18 sur une portion filetée non destinée à être insérée dans un embout femelle 13.

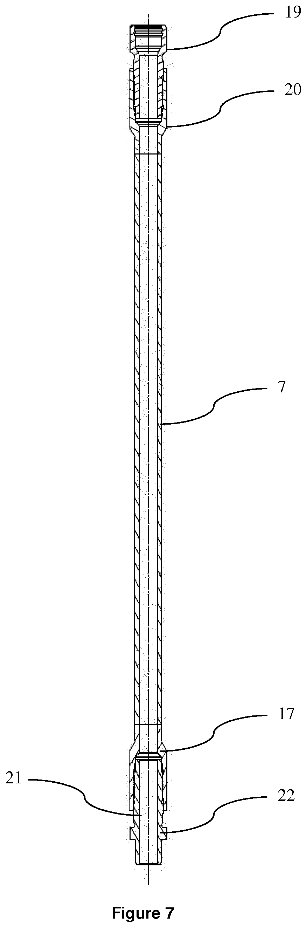

Selon une troisième variante de réalisation de l'invention illustrée sur la figure 7, les éléments 7 de lignes auxiliaires sont raccordés bout à bout au moyen de raccords. Un raccord est composé d'une goupille mâle 21 insérée dans un réceptacle 17 à une extrémité de l'élément 7 et d'une goupille femelle 19 insérée dans un réceptacle 20 situé à l'autre extrémité de l'élément 7. La goupille mâle 21 coopère de façon étanche avec la goupille femelle 19 d'un autre élément 7. Par exemple, la goupille mâle 21 du raccord est une partie tubulaire qui s'insère dans une autre partie tubulaire 19. La surface intérieure de la goupille femelle 19 est ajustée à la surface extérieure de la goupille mâle 21. Des joints sont montés dans des rainures usinées sur la surface intérieure de la goupille femelle 19 afin d'assurer l'étanchéité de la liaison. Le raccord autorise un déplacement axial d'un des éléments 7 par rapport à l'autre, tout en maintenant la liaison étanche entre les deux éléments. Le réceptacle 20 est fixé par exemple par soudure ou sertissage à un tube central ayant sensiblement la même longueur que l'élément de conduite principal 6 auquel est rattaché l'élément de conduite auxiliaire 7. La goupille femelle 19 est fixée au réceptacle 20 notamment par vissage. Le réceptacle 17 est fixé par exemple par soudure ou sertissage au tube central. La goupille mâle 21 est fixée au réceptacle 17 notamment par vissage. Ainsi, les goupilles mâle 21 et femelle 19 sont des pièces d'usure pouvant être changées lors de la maintenance de la colonne montante. Pour ce mode de réalisation de l'invention, le moyen de réglage de jeu est formé par la goupille mâle 21 qui est filetée dans le réceptacle et qui possède un épaulement 22 assurant la butée.

Selon un mode de réalisation de l'invention, les éléments de tube auxiliaire 7 sont des tubes frettés par des fils de renfort, telles que des fibres de verre, de carbone, ou en aramide enrobées dans une matrice polymère. Ainsi, la résistance et le poids des lignes auxiliaires sont optimisés. En effet, la présente invention est particulièrement adapté pour les éléments de tubes auxiliaires frettés qui présentent l'avantage de réduire l'épaisseur d'acier et donc le poids de la colonne montante. L'inconvénient du frettage de présenter une plus faible raideur en flexion est compensé par le jeu qui permet de limiter le flambage des conduites auxiliaires. Alternativement, les éléments de tube principal et de tubes auxiliaires peuvent être composés en alliage d'aluminium ou en alliage de titane.

Le fait de disposer une seule bague de verrouillage 11 à la périphérie extérieure des brides 23 et 24 permet une organisation compacte des éléments de tube auxiliaire 7 et des éléments de tube principal 6. En conséquence, on peut limiter l'écartement des éléments de tube auxiliaire 7 et des éléments de tube principal 6 par rapport à la bague 11. Ainsi, on minimise les efforts de flexion auxquels sont soumises les brides 23 et 24.

De plus, le connecteur selon l'invention offre une solution intéressante pour monter rapidement et simplement une colonne montante dont les efforts de tensions sont répartis entre les éléments de tubes auxiliaires et le tube principal. En effet, bien que les éléments de tubes auxiliaires 7 et l'élément de tube principal 6 soient montés de manière à supporter conjointement les efforts de tension appliqués à la colonne, la connexion d'un tronçon 4 de colonne montante à un autre tronçon 4 de colonne montante est réalisée en une opération au moyen de la bague 11. Cette connexion permet de mettre en communication et de rendre étanche l'élément de tube principal d'un tronçon avec celui de l'autre tronçon et, simultanément, de mettre en communication et de rendre étanche les éléments de conduites auxiliaires d'un des tronçons avec ceux de l'autre tronçon.

Par conséquent, la combinaison du verrouillage par bague périphérique et l'existence de jeu dans la liaison des éléments de tube auxiliaire permet d'optimiser le poids de la colonne montante.

### Exemple d'application

Afin de présenter la répartition des efforts et le gain en masse dans une colonne montante selon l'invention, un exemple d'application selon l'invention est présenté.

Pour cet exemple (conformément à la figure 3), les conditions sont les suivantes :
- Profondeur d'eau : 12,500 ft (3810 m)
- Densité maximale de la boue: 14.5 ppg (1.74)
- Pression de service des lignes auxiliaires : 15,000 psi (1034 bar)
- Charge maximale de travail du connecteur : 4,000 kips (1814 t)
- Longueur des tronçons de colonne montante : 75 ft (22.86 m)
- Architecture de riser « tapered » : 7 sections d'épaisseur variable pour le tube principal.

Le tableau 1 présente la répartition des efforts dans le tube principal, dans les tubes auxiliaires : « kill line », « choke line », « booster line », « hydraulic line » en fonction du jeu J en pouce.

**Tableau 1 - Répartition des efforts dans la colonne montante**

| Jeu J (pouces) | 0 | 0,25 | 0,5 | 1 | 1,5 | 2 | 2,5 |
|---|---|---|---|---|---|---|---|
| Tube principal | 45 % | 50 % | 55 % | 67 % | 82 % | 97 % | 100 % |
| Kill line | 20 % | 18 % | 16 % | 12 % | 7 % | 1 % | 0 % |
| Choke line | 20 % | 18 % | 16 % | 12 % | 7 % | 1 % | 0 % |
| Booster line | 7 % | 6 % | 6 % | 4 % | 1 % | 0 % | 0 % |
| Hydraulic line | 4 % | 4 % | 3 % | 2 % | 1 % | 0 % | 0 % |

On constate que la répartition varie dans le sens d'une plus grande contribution du tube principal lorsque le jeu augmente. Entre un jeu nul et un jeu d'un pouce (25,4 mm) la répartition des efforts entre le tube principal et les lignes périphériques passe respectivement de 45 % - 55 % à 67 % - 33 %. Au-delà de 2 pouces (50,8 mm), on considère qu'il n'y a plus une répartition des efforts entre les différentes lignes, seule la conduite principale participe à la reprise des efforts, ce qui n'est pas souhaitable.

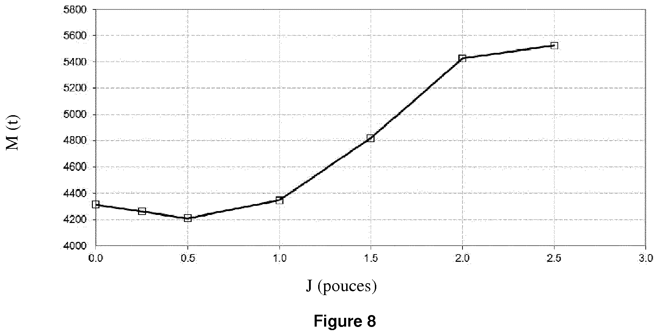

La figure 8 représente la masse M en tonne de la colonne montante en fonction du jeu J en pouce pour cet exemple. Pour cette courbe, les épaisseurs du tube principal et des lignes auxiliaires ont été optimisées de manière à répondre aux conditions citées ci-dessus. On constate que la masse est minimale entre 0 et 1 pouce (25,4 mm) et qu'un optimum de masse est obtenu pour un jeu de 0,5 pouce (12,7 mm). Au-delà de 1,25 pouce (31,75 mm) la masse de la colonne montante augmente fortement, ce qui entraîne une augmentation du coût de la colonne montante.

Au vu de la répartition des efforts et de la variation de la masse en fonction du jeu, le jeu peut être réglé entre 0 et 1,25 pouce (0 et 31,75 mm) pour cet exemple selon l'invention. De préférence, le jeu peut être réglé entre 0,1 et 1 pouce (2,54 mm et 25,4 mm). De manière optimale, le jeu peut être réglé à 0,5 pouce (12,7 mm).

## Revendications

1. Connecteur pour assembler deux tronçons (4) de colonne montante, comportant un premier élément de tube principal (6) prolongé par un élément connecteur mâle (9) muni d'une bride mâle (24) percée par au moins un orifice pour le passage d'un premier élément de tube auxiliaire (7), un deuxième élément de tube principal (6) prolongé par un connecteur femelle (8) muni d'une bride femelle (23) percée par au moins un orifice pour le passage d'un deuxième élément de tube auxiliaire (7), l'élément connecteur mâle (9) s'emboîtant dans ledit élément connecteur femelle (8) pour connecter les deux éléments de tube principal (6) et les deux éléments de tube auxiliaire (7), ledit connecteur (5) comprenant des moyens de verrouillage de l'assemblage constitués d'une bague de verrouillage (11) assemblant lesdites brides mâle (24) et femelle (23) en coopérant avec la périphérie desdites brides mâle (24) et femelle (23), **caractérisé en ce qu'**un des éléments de tube auxiliaire (7) est solidaire d'une des brides mâle (24) ou femelle (23) et l'autre élément de tube auxiliaire (7) est connecté par une liaison pivot glissant à l'autre bride mâle (24) ou femelle (23), ladite liaison pivot glissant autorisant un mouvement de translation relatif entre ladite bride et ledit élément de tube auxiliaire (7) sur une distance limitée par un moyen de réglage de jeu (15) placé entre ledit élément de tube auxiliaire (7) et ladite bride.

2. Connecteur selon la revendication 1, dans lequel ladite bague de verrouillage (11) comporte une première (40, 41) et une deuxième (30, 31) séries de tenons sur sa face intérieure et lesdites brides mâle (24) et femelle (23) comportent respectivement une troisième (42, 43) et une quatrième (32, 33) séries de tenons sur leur surface périphérique, lesdites troisième (42, 43) et quatrième séries (32, 33) de tenons coopérant respectivement avec lesdites première (40, 41) et deuxième séries (40, 41) de tenons.

3. Connecteur selon la revendication 2, dans lequel chaque série de tenons comporte au moins deux rangées d'au moins quatre tenons.

4. Connecteur selon l'une des revendications précédentes, dans lequel ledit moyen de réglage de jeu (15) est formé par un écrou ou une pièce filetée.

5. Connecteur selon la revendication 4, dans lequel un élément de tube auxiliaire (7) est prolongé par un embout femelle (13) et l'autre élément de tube auxiliaire (7) est prolongé par un embout mâle (14) équipé d'un écrou (15).

6. Connecteur selon la revendication 4, dans lequel un élément de tube auxiliaire (7) est prolongé par un embout femelle (13) et l'autre élément de tube auxiliaire (7) est prolongé par un réceptacle (17) dans lequel est insérée une goupille mâle (18) équipée d'une butée (15).

7. Connecteur selon la revendication 4, dans lequel un élément de tube auxiliaire (7) est prolongé par un réceptacle (20) dans lequel est insérée une goupille femelle (19) et l'autre élément de tube auxiliaire (7) est prolongé par un réceptacle (17), dans lequel est insérée une goupille filetée mâle (21), ladite goupille filetée mâle comprenant un épaulement (22).

8. Connecteur selon l'une des revendications précédentes, dans lequel ladite distance limitée par ledit moyen de réglage de jeu est comprise entre 0 et 38,1 mm, de préférence entre 2,54 et 25,4 mm.

9. Connecteur selon l'une des revendications précédentes, dans lequel ledit élément connecteur mâle (9) comprend un manchon (10) inséré dans ledit élément connecteur femelle (8).

10. Connecteur selon l'une des revendications précédentes, dans lequel ledit élément de tube auxiliaire (7) est un tube en acier fretté par des fils de renfort, telles que des fibres de verre, de carbone, ou en aramide enrobées dans une matrice polymère.

11. Connecteur selon l'une des revendications précédentes, dans lequel ladite liaison pivot glissant est réalisée dans ladite bride mâle (24).

12. Connecteur selon l'une des revendications précédentes, dans lequel ladite distance du mouvement de translation relatif de ladite liaison pivot glissant est réglée de telle sorte à être positive lors de la connexion des tronçons (4) et à être nulle lors de l'utilisation de la colonne montante pour des opérations de forage en mer.

13. Colonne montante comprenant au moins deux tronçons (4) de colonne montante assemblés par un connecteur (5) selon une des revendications précédentes.

## Patentansprüche

1. Verbinder, um zwei Abschnitte (4) eines Steigrohrs zu verbinden, umfassend ein Hauptrohrelement (6), das durch ein männliches Verbindungselement (9) verlängert ist, das mit einem Steckflansch (24) versehen ist, der mindestens eine Öffnung für den Durchgang eines ersten Hilfsrohrelements (7) aufweist, ein zweites Hauptrohrelement (6), das durch ein weibliches Verbindungselement (8) verlängert ist, das mit einem Aufnahmeflansch (23) versehen ist, der mindestens eine Öffnung für den Durchgang eines zweiten Hilfsrohrelements (7) aufweist, wobei das männliche Verbindungselement (9) in das weibliche Verbindungselement (8) eingesteckt wird, um die beiden Hauptrohrelemente (6) und die beiden Hilfsrohrelemente (7) miteinander zu verbinden, wobei der Verbinder (5) Mittel zur Verriegelung des Zusammenbaus umfasst, die von einem Verriegelungsring (11) gebildet sind, der die Steck- (24) und Aufnahmeelemente (23) zusammenfügt, wobei er mit der Peripherie der Steck-(24) und Aufnahmeelemente (23) zusammenwirkt, **dadurch gekennzeichnet, dass** eines der Hilfsrohrelemente (7) mit einem der Steck- (24) oder Aufnahmeelemente (23) verbunden ist, und das andere Hilfsrohrelement (7) durch eine Gleitschwenkverbindung an das andere Stecke- (24) oder Aufnahmeelement (23) angeschlossen ist, wobei die Gleitschwenkverbindung eine relative Translationsbewegung zwischen dem Aufnahmeflansch und dem Hilfsrohrelement (7) über eine Distanz gestattet, die durch ein Mittel zur Spielregulierung (15), das zwischen dem Hilfsrohrelement (7) und dem Aufnahmeflansch angeordnet ist, begrenzt wird.

2. Verbinder nach Anspruch 1, bei dem der Verriegelungsring (11) eine erste (40, 41) und eine zweite (30, 31) Reihe von Zapfen auf seiner Innenseite umfasst, und die Steck- (24) und Aufnahmeelemente (23) eine dritte (42, 43) bzw. eine vierte (32, 33) Reihe von Zapfen auf ihrer Umfangsfläche umfassen, wobei die dritte (42, 43) und vierte (32, 33) Reihe von Zapfen mit der ersten (40, 41) bzw. zweiten (40, 41) Reihe von Zapfen zusammenwirken.

3. Verbinder nach Anspruch 2, bei dem jede Reihe von Zapfen mindestens zwei Reihen von mindestens vier Zapfen umfasst.

4. Verbinder nach einem der vorhergehenden Ansprüche, bei dem das Spielregulierungsmittel (15) von einer Mutter oder einem Gewindeteil gebildet ist.

5. Verbinder nach Anspruch 4, bei dem ein Hilfsrohrelement (7) durch eine Muffe (13) verlängert ist, und das andere Hilfsrohrelement (7) durch eine mit einer Mutter (15) versehene Einsteckmuffe (14) verlängert ist.

6. Verbinder nach Anspruch 4, bei dem ein Hilfsrohrelement (7) durch eine Muffe (13) verlängert ist, und das andere Hilfsrohrelement (7) durch einen Behälter (17) verlängert ist, in den ein Steckstift (18), der mit einem Anschlag (15) versehen ist, eingesteckt ist.

7. Verbinder nach Anspruch 4, bei dem ein Hilfsrohrelement (7) durch einen Behälter (20) verlängert ist, in den ein Aufnahmestift (19) eingesteckt ist, und das andere Hilfsrohrelement (7) durch einen Behälter (17) verlängert ist, in den ein Gewindesteckstift (21) eingesteckt ist, wobei der Gewindesteckstift einen Absatz (22) umfasst.

8. Verbinder nach einem der vorhergehenden Ansprüche bei dem die durch das Spielregulierungsmittel begrenzte Distanz zwischen 0 und 38,1 mm, vorzugsweise zwischen 2,54 und 25,4 mm beträgt.

9. Verbinder nach einem der vorhergehenden Ansprüche, bei dem das männliche Verbindungselement (9) eine Muffe (10) umfasst, die in das weibliche Verbindungselement (8) eingesetzt ist.

10. Verbinder nach einem der vorhergehenden Ansprüche, bei dem das Hilfsrohrelement (7) ein Stahlrohr ist, das mit Verstärkungsdrähten, wie Glas-, Karbon- oder von einer Polymermatrix ummantelten Aramidfasern, geschrumpft ist.

11. Verbinder nach einem der vorhergehenden Ansprüche, bei dem die Gleitschwenkverbindung in dem Steckflansch (24) ausgeführt ist.

12. Verbinder nach einem der vorhergehenden Ansprüche, bei dem die Distanz der relativen Translationsbewegung der Gleitschwenkverbindung derart eingestellt ist, dass sie beim Anschluss der Abschnitte (4) positiv ist, und bei der Verwendung des Steigrohrs für Bohrvorgänge im Meer gleich Null ist.

13. Steigrohr, umfassend mindestens zwei Steigrohrabschnitte (4), die durch einen Verbinder (5) nach einem der vorhergehenden Ansprüche zusammengefügt sind.

## Claims

1. A connector for assembling two riser sections (4), comprising a first main tube element (6) extended by a male connector element (9) provided with a male flange (24) pierced by at least one orifice for passage of a first auxiliary line element (7), a second main tube element (6) extended by a female connector element (8) provided with a female flange (23) pierced by at least one orifice for passage of a second auxiliary line element (7), male connector element (9) fitting into said female connector element (8) so as to connect the two main tube elements (6) and the two auxiliary line elements (7), said connector (5) comprising assembly locking means consisting of a locking collar (11) assembling said male (24) and female (23) flanges by cooperating with the periphery of said male (24) and female (23) flanges, **characterized in that** one of auxiliary line elements (7) is integral with one of the male (24) or female (23) flanges and the other auxiliary line element (7) is connected by a sliding pivot connection to the other male (24) or female (23) flange, said sliding pivot connection allowing a relative translational motion between said flange and said auxiliary line element (7) over a distance limited by a clearance adjustment means (15) positioned between said auxiliary line element (7) and said flange.

2. A connector as claimed in claim 1, wherein said locking collar (11) comprises a first (40, 41) and a second (30, 31) series of studs on the inner face thereof and said male (24) and female (23) flanges respectively comprise a third (42, 43) and a fourth (32, 33) series of studs on the peripheral surface thereof, said third (42, 43) and fourth (32, 33) series of studs cooperating with said first (40, 41) and second (30, 31) series of studs respectively.

3. A connector as claimed in claim 2, wherein each series of studs comprises at least two rows of at least four studs.

4. A connector as claimed in any one of the previous claims, wherein said clearance adjustment means (15) consists of a nut or a threaded part.

5. A connector as claimed in claim 4, wherein one auxiliary line element (7) is extended by a female end piece (13) and the other auxiliary line element (7) is extended by a male-end piece (14) provided with a nut (15).

6. A connector as claimed in claim 4, wherein one auxiliary line element (7) is extended by a female end piece (13) and the other auxiliary line element (7) is extended by a receptacle (17) in which a male pin (18) provided with a stop (15) is inserted.

7. A connector as claimed in claim 4, wherein one auxiliary line element (7) is extended by a receptacle (20) in which a female pin (19) is inserted and the other auxiliary line element (7) is extended by a receptacle (17) in which a male threaded pin (21) is inserted, said male threaded pin comprising a shoulder (22).

8. A connector as claimed in any one of the previous claims, wherein said distance limited by said clearance adjustment means ranges between 0 and 38.1 mm, preferably between 2.54 and 25.4 mm.

9. A connector as claimed in any one of the previous claims, wherein said male connector element (9) comprises a sleeve (10) inserted in said female connector element (8).

10. A connector as claimed in any one of the previous claims, wherein said auxiliary line element (7) is a steel tube hooped by reinforcement wires such as glass, carbon or aramid fibers, coated with a polymer matrix.

11. A connector as claimed in any one of the previous claims, wherein said sliding pivot connection is achieved in said male flange (24).

12. A connector as claimed in any one of the previous claims, wherein said distance of the relative translational motion of said sliding pivot connection is adjusted so as to be positive upon connection of sections (4) and zero when using the riser for offshore drilling operations.

13. A riser comprising at least two riser sections (4) assembled by a connector (5) as claimed in any one of the previous claims.
